(19) Europäisches Patentamt
European Patent Office
Office européen des brevets

(11) **EP 1 298 254 B1**

(12) **FASCICULE DE BREVET EUROPEEN**

(45) Date de publication et mention
de la délivrance du brevet:
**10.03.2010   Bulletin 2010/10**

(51) Int Cl.:
***E02D 17/12*** *(2006.01)*      ***E02F 5/22*** *(2006.01)*
***C04B 14/36*** *(2006.01)*

(21) Numéro de dépôt: **02292390.8**

(22) Date de dépôt: **27.09.2002**

(54) **Procédé de préparation d'un remblai autocompactant**

Verfahren zur Herstellung von selbstverdichtendem Füllmaterial

Method for preparation of self compacting back-fill material

(84) Etats contractants désignés:
**AT BE BG CH CY CZ DE DK EE ES FI FR GB GR IE IT LI LU MC NL PT SE SK TR**

(30) Priorité: **28.09.2001   FR 0112508**

(43) Date de publication de la demande:
**02.04.2003   Bulletin 2003/14**

(73) Titulaire: **Eurovia Management**
**92500 Rueil Malmaison (FR)**

(72) Inventeurs:
- **Zygomalas, Gérard**
  **02100 Saint Quentin (FR)**
- **Debever, Dominique**
  **59130 Lambersart (FR)**
- **Bakowski, Stéphane**
  **59000 Lille (FR)**

(74) Mandataire: **Ahner, Francis**
**Cabinet Régimbeau**
**20, rue de Chazelles**
**75847 Paris cedex 17 (FR)**

(56) Documents cités:
**EP-A- 1 103 533       EP-A- 1 146 172**
**FR-A- 2 758 378       JP-A- 2000 008 367**
**US-A- 3 607 078       US-A- 5 716 448**

- **PATENT ABSTRACTS OF JAPAN vol. 2000, no. 12, 3 janvier 2001 (2001-01-03) & JP 2000 248280 A (TATEIWA YOSHITAKA), 12 septembre 2000 (2000-09-12)**
- **PATENT ABSTRACTS OF JAPAN vol. 1998, no. 14, 31 décembre 1998 (1998-12-31) & JP 10 237895 A (NITTO SEIKO CO LTD), 8 septembre 1998 (1998-09-08)**

**Description**

La présente invention concerne les techniques de remblayage, en particulier à l'aide de remblais autocompactants.

Dans un chantier d'assainissement classique 30% du coût d'un chantier consiste à :

- charger les déblais,
- les emmener en décharge,
- ramener d'autres matériaux,
- assurer la mise en oeuvre des remblais.

Aujourd'hui, deux types de technique de remblayage de tranchée existent :

- la méthode « classique » qui consiste à compacter par des moyens relativement lourds des matériaux d'apport (généralement élaborés en carrière), voire des matériaux du site traité à la chaux,
- la méthode « novatrice » qui utilise des matériaux autocompactants à base de cendres volantes (demande de brevet FR2758378) ou à base de matériaux de carrières et qui suppriment les moyens de compactage. Toutefois, une telle méthode implique d'amener sur place les matériaux autocompactants, augmentant ainsi les coûts et délais de tels chantiers.

Le brevet US 5 716 448 décrit des remblais autocompactés qui ont une résistance à la compression à 28 jours comprise entre 69 et 86 kg/cm$^2$(soit 6.9 à 8.6 MPa). Toutefois, ces remblais autocompactés ne sont pas obtenus par le procédé selon la présente invention et leur résistance à la compression est trop importante.

Les inventeurs de la présente demande ont découvert de façon surprenante qu'il était possible de fabriquer in situ avec les déblais de chantier un remblai autocompactant à l'aide d'un procédé simple, rapide et économique.

En effet, la réutilisation immédiate des déblais en remblais permet d'avoir, de l'extraction à la mise en remblai, une durée de l'ordre de 6 min, sans délai d'attente de camions ou de livraison de remblai.

Un tel procédé permet une réduction jusqu'à 70 % des transports et des frais de décharges et la réalisation d'un remblai économique et écologique.

De plus, le produit obtenu par un tel procédé étant autocompactant, il possède tous les avantages d'un remblai autocompactant :

- aucun défaut de compactage,
- coût de mise en oeuvre faible,
- sécurité (pas de personnel en fond de fouille avec des engins vibrants pour compacter),
   tout en étant plus économique et écologique puisque ce sont les déblais de chantier qui servent de base à ce produit.

La présente invention concerne donc un procédé de réalisation de remblais autocompactants, non essorable, impliquant les opérations successives suivantes menées sur site :

- a) extraction et récupération des matériaux de déblais issus d'une tranchée,
- b) vérification de la teneur en argile de ces matériaux de déblais par mesure de la valeur de bleu de méthylène, cette valeur devant être inférieure à 8,
- c) détermination de la teneur en eau de ces matériaux de déblais,
- d) traitement préalable des matériaux de déblais par concassage ou écrêtage, afin d'obtenir des granulats de diamètre inférieur à 50 mm,
- e) ajout aux matériaux de déblais obtenus à l'étape d) de :

   - 4 à 10% en poids de ciment par rapport au poids total des matériaux secs,
   - 0,05 à 0,15% en poids d'un agent de prise en masse du mélange par rapport au poids total des matériaux secs, et
   - la quantité d'eau nécessaire pour obtenir après malaxage un matériau de remblai présentant une teneur en eau comprise entre 40% et 55% en poids par rapport au poids total des matériaux secs,

- f) malaxage,
- g) pompage du mélange obtenu dans ladite tranchée pour former un remblai qui subit un autocompactage après une courte période.

L'obtention d'un indice portant élevé dans de courts délais permet la mise en oeuvre de la couche de forme, voire de fondation dans les heures qui suivent le remblaiement et une remise en trafic des tranchées sous quelques heures. Avantageusement, cet autocompactage se fait sans retrait, fissuration ou ressuage immédiat ou au fur et à mesure de l'autocompactage.

On entend par « remblai non essorable » au sens de la présente invention, tout matériau dont la capacité portante est obtenue par prise et durcissement du liant.

On entend par « valeur de bleu de méthylène » au sens de la présente invention la mesure de la capacité d'adsorption de bleu de méthylène des matériaux de déblais. Cette mesure est réalisée selon la norme NF P 94-068 par l'essai à la tache. Afin de pouvoir réaliser le procédé selon la présente invention et obtenir un remblai autocompactant, il est nécessaire que cette valeur soit inférieure à 8. De façon avantageuse, cette valeur doit être inférieure 6. De façon encore plus avantageuse, elle est inférieure à 2,5. En effet, les matériaux de déblais utilisables dans le procédé selon la présente invention sont ceux qualifiés par le guide technique de réalisation des remblais et des couches de forme (GTR, édité par le LCPC et le SETRA, édition septembre 1992), de limon ou limon sableux.

Avantageusement, l'étape d) est réalisée de façon à obtenir un matériau de déblais de granulométrie 0/20mm à 0/50mm, avantageusement 0/20 mm ou 0/40 mm. Cette granulométrie est mesurée selon la norme NF P 18-560.

On entend par « ciment », au sens de la présente invention, tout ciment assurant la fonction de liant du mélange. Avantageusement, le ciment utilisé est un ciment ayant un pourcentage de clinker compris entre environ 95% et 100%, de façon avantageuse il s'agit du ciment portland. De façon encore plus avantageuse, il s'agit du ciment CPA-CEM 1 52,5 R (mesuré selon la norme sur les ciments NF P 15-101-1). Ce ciment est disponible commercialement chez la société HOLCIM.

On entend par « agent de prise en masse du mélange », au sens de la présente invention, tout agent permettant la prise en masse du mélange et l'obtention d'un indice portant immédiat élevé dans un délai court, au repos, en conférant au produit un caractère thixotropique. Avantageusement cet agent est constitué par des fibres en polymère synthétique dont la taille est choisie par l'homme du métier de façon à remplir la fonction voulue. De façon avantageuse, il s'agit de fibres acryliques, de façon encore plus avantageuse, ces fibres sont des fibres polypropylènes de type monofilament. En particulier, elles possèdent les caractéristiques suivantes : 20 mm de longueur, 0,35 g par 450 m de fil. Elles sont disponibles commercialement chez HFT.

Avantageusement, la quantité d'eau ajoutée à l'étape e) est celle nécessaire pour obtenir après malaxage un matériau de remblai présentant une teneur en eau comprise entre 44,5% et 47,5% en poids par rapport au poids total des matériaux secs.

Dans un mode de réalisation particulier de l'invention, 0,05 à 1% en poids d'un adjuvant par rapport au poids total du ciment est ajouté à l'étape c). Avantageusement, cet adjuvant est choisi dans le groupe constitué par les réducteurs d'eau et les entraîneurs d'air. Les réducteurs d'eau et entraîneurs d'air sont disponibles commercialement chez les sociétés Chryso et Sika sous les marques Sikafluid®, Intraplast® RCC, Viscocrete®, Sikament® 305 etc..

Dans un autre mode de réalisation de l'invention, 1 à 4% en poids de pigment par rapport au poids total du ciment est ajouté à l'étape c). Ce pigment permet de teindre en tout ou partie le remblai de façon à supprimer les rouleaux avertisseurs de présence de réseau.

Le pH des matériaux de déblais est modifié par l'ajout du ciment (pH basique). Il diminue de lui-même au court du temps pour être au bout d'environ 90 jours inférieur ou égal à 11.

Avantageusement, l'autocompactage de l'étape g) dure moins de trois heures, de façon avantageuse environ 2h30 et le remblai obtenu possède ainsi une portance suffisante en moins de 3h00, avantageusement en environ 2h30.

Dans un autre mode de réalisation, pour prévenir les possibles risques de poussée d'Archimède exercée par le produit obtenu à l'étape g) sur les tuyaux présents dans la tranchée, il comprend une étape supplémentaire f1) de mise en place et réglage altimétrique de butées aptes à contrôler le déplacement desdits tuyaux, ladite étape étant réalisée avant l'étape g). Avantageusement les butées viennent coiffer les tuyaux interdisant leurs déplacements latéraux et limitant leurs déplacements verticaux ascendants. Cette étape est décrite dans la demande de brevet FR2758378.

La présente invention concerne également un remblai autocompacté **caractérisé en ce qu**'il est susceptible d'être obtenu par le procédé selon la présente invention.

De façon avantageuse, le remblai selon la présente invention présente un indice portant immédiat supérieur à 10 (mesuré 24 heures après fabrication de ce remblai selon la norme NF P 94-078), avantageusement supérieur ou égal à 13. Ce paramètre conditionne le délai nécessaire entre la pose du remblai et la réalisation des couches de forme. De façon avantageuse la résistance à la compression 28 jours après la fabrication de ce remblai est comprise entre 0,1 MPa et 1,3 MPa (mesurée selon la norme NF P 98-232.1) et avantageusement sa résistance à la compression 90 jours après la fabrication de ce remblai est comprise entre 0,1 et 2 MPa (mesurée selon la norme NF P 98-232.1) le remblai autocompacté étant donc piochable.

De façon avantageuse le remblai selon la présente invention présente un affaissement au cône supérieur à 12 cm (mesuré selon la norme NF P 18-451), avantageusement supérieur à 13,5 cm, le remblai étant donc pompable. Avantageusement, le remblai autocompacté a une densité humide d'environ 1,8 T/m$^3$ lors de sa fabrication, de façon avantageuse d'environ 1,65 environ 28 jours après sa fabrication et de façon encore plus avantageuse, une densité sèche d'environ 1,23.

Avantageusement le remblai autocompacté selon la présente invention a un pH d'environ 11, de façon avantageuse d'environ 10.

La présente invention concerne également l'utilisation du remblai autocompacté selon la présente invention en tant que remblai des tranchés d'assainissement, remblai contigu aux bâtiments, remblai de carrières souterraines, ou dans le traitement de sols de petites surfaces.

En effet ce remblai peu être utilisé à forte profondeur, dans des chantiers éloignés d'une décharge et permet de suppléer aux défauts engendrés lors de la pose de canalisation dans la tranchée puisqu'il assure une excellente étanchéité de l'ensemble constitué par les tuyaux et le remblai autocompacté.

Un remblai autocompacté selon la présente invention peut par exemple être fabriqué par une machine du type centrale mobile qui comprend :

- une trémie réceptrice,
- un émotteur - cribleur,
- un convoyeur de transport,
- un stockage de pulvérulent,
- un stockage d'eau et de produits annexes,
- un mélangeur et
- une pompe de transfert de produit fini.

Elle permet donc de fabriquer in situ un remblai autocompactant à base de déblais de tranchée. Elle réalise donc les étapes d) à g) du procédé selon la présente invention.

Cette machine avantageusement remplit les conditions suivantes :

- elle est dimensionnée pour réaliser des volumes journaliers du remblai autocompactant selon la présente invention ne dépassant pas 100 m$^3$.
- son encombrement est limité au gabarit routier pour permettre un transport aisé et pour accéder facilement aux différents chantiers.
- ses principales caractéristiques sont :

  (a) système de pesée pondérale pour les matériaux à 5% près et pour l'eau à 1% près
  (b) malaxeur à arbres verticaux de 1,2 m$^3$ minimum de capacité
  (c) silo à ciment de 1,5 à 2 T minimum
  (d) silo à eau de 1 m$^3$ minimum
  (e) stockage tampon pour le produit fini de 0,3 m$^3$
  (f) pompage du produit vers la tranchée

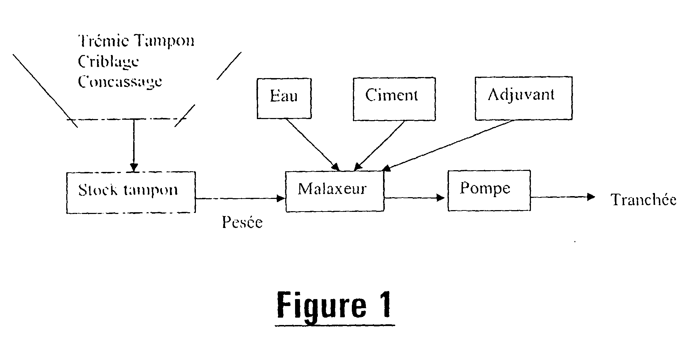

La figure 1 montre un schéma de principe d'une telle machine.

Les exemples suivants sont donnés à titre indicatif non limitatif.

## 1 ESSAIS EN LABORATOIRE

### Exemple 1 : Mise en oeuvre du procédé :

Les essais ont été menés avec des matériaux de déblais ayant les caractéristiques suivantes :

- classification GTR du déblai : A1C1th
- valeur au bleu de méthylène : 1,4,
- teneur en can naturelle : 20%,
- granulométrie 0/50mm.

A ces matériaux de déblais (qui représentent 93% en poids de matériaux secs par rapport au poids total des matériaux secs) sont rajoutés du 7% en poids de ciment CPA 52,5 R CP II fourni par la société HOLCIM par rapport au poids total des matériaux secs et 0,15% en poids de fibres acryliques fournies par la société HFT par rapport au poids total des matériaux secs.

De l'eau est également rajoutée de façon à obtenir un matériau de déblai ayant une teneur en eau de 46,00% après malaxage en poids par rapport au poids total des matériaux secs.

L'ensemble est malaxé pendant 4 minutes et disposé dans douze éprouvettes de 10mm x 20mm. Ces éprouvettes ont été confectionnées de manière à déterminer :

- les densités sèches et humides,
- les résistances à la compression au bout de 28 jours, 60 jours, 60 jours dont 32 jours en immersion (rapport immersion / compression) et 90 jours,
- le pH,
- l'apparition éventuelle de fissures ou retrait.

L'affaissement au cône d'Abrahams en fonction de la teneur en eau et l'indice portant immédiat ont également été mesurés sur le mélange obtenu à l'aide d'un appareil normalisé respectivement selon les normes NF P 18-451 et NF P 94-078.

**Densité humide en T/m$^3$ :**

La densité humide du remblai selon la présente invention est mesurée pour plusieurs éprouvettes à 28 jours, 60 jours et 90 jours après la mise en oeuvre du procédé selon la présente invention. Les résultats sont rassemblés dans le tableau 1.

*Tableau 1 : densité humide en T/m$^3$ selon l'éprouvette et le temps après la mise en oeuvre du procédé selon la présente invention*

| éprouvette | initiale | 28 j | 60 j | 90 j |
|---|---|---|---|---|
| 1 | 1,82 | 1,61 | 1,64 | 1,66 |
| 2 | 1,80 | 1,65 | 1,63 | 1,63 |
| 3 | 1,79 | 1,66 | 1,63 | 1,67 |
| moyenne | 1,80 | 1,64 | 1,63 | 1,65 |

La densité humide du produit selon la présente invention se stabilise à environ 1,65T/m$^3$ à partir de 28 jours.

**Densité sèche**

La densité sèche est de l'ordre de 1,23 T/m$^3$

**Affaissement au cône en fonction de la teneur en eau du matériau de remblai après malaxage**

Une valeur de 12 cm minimum est requise pour avoir un matériau pompable.
La valeur d'affaissement au cône du remblai selon la présente invention est mesurée pour différentes teneurs en eau du matériau de remblai après malaxage. Les résultats sont rassemblés dans le tableau 2.

*Tableau 2 : valeur au cône en fonction de la teneur en eau du matériau de remblai après malaxage selon la présente invention*

| Teneur en eau s'exprimant en (poids humide - poids sec)/poids sec | valeur au cône (cm) |
|---|---|
| 44% | 11 |
| 45% | 12,5 |
| 46% | 13,5 |
| 47% | 14,5 |
| 48% | 16 |
| 49% | 17 |
| 50% | 18 |

L'évolution de la valeur au cône est donc fonction de la teneur en eau. Elle est quasi linéaire avec approximativement dans cette plage pour les matériaux considérés:

$$\text{Valeur au cône} = 1{,}1667 \times W\% - 40{,}33,$$

avec W représentant la teneur en eau du matériau de remblai après malaxage, W étant exprimé en % en poids par rapport au poids total des matériaux secs.

La teneur en eau minimum pour obtenir un matériau pompable est donc pour les matériaux considérés dans le présent exemple, d'avantageusement 44,5% en poids par rapport au poids total des matériaux secs.

**Retrait**

En laboratoire, le produit selon la présente invention n'a jamais présenté de retrait ou de fissuration lors du développement du phénomène de prise. Cette constatation sera vérifiée avec de plus grosses quantités lors de l'essai grandeur nature.

**PH**

Le pH s'il n'est pas très important pour le matériau de remblai et son autocompactage, peut devenir très contraignant vis à vis des utilisateurs. C'est pourquoi il est préférable d'avoir un pH de l'ordre de 11 avantageusement inférieur à 10 à long terme.

Le pH naturel du terrain est ici de 7,4.

Après la mise en oeuvre du procédé selon la présente invention, le pH présente l'évolution indiquée dans le tableau 3 suivant.

*Tableau 3 : Evolution du pH en fonction du temps après la mise en oeuvre du procédé selon la présente invention*

| éprouvette | initial | 28 j | 60 j | 90 j | 360 j |
|---|---|---|---|---|---|
| 1 | 13,20 | 12,20 | 11,40 | 11,15 | 10 |

Le pH diminue fortement jusqu'à 360 jours mais il n'a pas pu être mesuré, faute de temps, à quelle valeur il se stabilisait à terme. Toutefois, les valeurs à 360 jours et la forme de la courbe permettent de penser que le pH sera à terme inférieur à 11, avantageusement inférieur à 10.

**Indice portant immédiat (IPI)**

Ce paramètre est un des plus importants puisqu'il conditionne le délai nécessaire entre la fin de la mise en oeuvre du remblai selon la présente invention et la réalisation de la couche de forme.

Des essais ont été effectués à 24h, 48h, 72h, et à 24 h avec une teneur en eau variable. Les résultats sont rassemblés dans les tableaux 4 et 5.

*IPI réalisés avec une teneur en eau de 46 %*

*Tableau 4: Evolution de l'IPI en fonction du temps après la mise en oeuvre du procédé selon la présente invention*

| | 0 h | 24 h | 48 h | 72 h |
|---|---|---|---|---|
| **IPI** | 0 | 13 | 20 | 23 |

Ces valeurs sont tout à fait compatibles avec une remise en service rapide du remblai selon la présente invention.

La couche de forme devrait pouvoir être mise en oeuvre dans un délai inférieur à 3 h (Ces résultats seront confirmés par la suite dans l'essai grandeur nature ).

*IPI fonction de la teneur en eau*

Pour déterminer l'influence de la teneur en eau sur la portance immédiate du remblai selon la présente invention, des mesures d'IPI à 24 h ont été effectuées en faisant varier la teneur en eau de 44 à 50 %. Les résultats sont rassemblés dans le tableau 5.

*Tableau 5 : Evolution de l'IPI mesurée 24 heures après la mise en oeuvre du procédé selon la présente invention en fonction de la teneur en eau en % en poids par rapport au poids total des matériaux secs, du matériau de remblai après malaxage.*

| teneur en eau s'exprimant en (poids humide - poids sec)/poids sec | IPI |
|---|---|
| 44,00% | 15 |
| 45,00% | 14 |
| 46,00% | 14 |
| 47,00% | 11 |
| 48,00% | 8 |
| 49,00% | 7,2 |
| 50,00% | 7 |

La teneur en eau est donc déterminante pour la valeur de l'IPI.

Avantageusement, la teneur en eau ne devra pas dépasser environ 47,50% en poids par rapport au poids total des matériaux secs pour les matériaux testés dans le présent exemple.

La plage d'utilisation du procédé selon la présente invention permettant d'avoir un bon IPI et un bon affaissement de cône est donc avantageusement comprise entre environ 44,5% et environ 47,5% de teneur en eau pour les matériaux considérés dans le présent exemple.

Cette plage est assez réduite et demandera donc une machine pouvant peser précisément les différents constituants. 5% d'erreur sur la pesée du matériau donne une différence de 1% sur la teneur en eau

### Résistance à la compression

Dans le cas des remblais autocompactants, on ne recherche pas des valeurs élevées en compression. En effet le produit doit rester piochable pour permettre une réintervention manuelle sur le réseau ainsi remblayé.

Pour cela le centre d'études sur les réseaux, les transports, l'urbanisme et les constructions publiques (CERTU) donne des valeurs limites de résistance suivantes:

Résistance à 28 jours < 1,3 MPa

Résistance à 90 jours < 2,0 MPa

Un essai de compression sur des éprouvettes conservées à sec ou en immersion a été effectué de manière à voir l'influence de la présence d'eau (montée de nappe ...) sur le produit selon la présente invention. Les résultats sont rassemblés dans les tableaux 6 et 7 suivants.

***Résistance à la compression (en MPa) sur éprouvette 10x10 :***

*Tableau 6 : Résistance à la compression en MPa selon l'éprouvette à sec et le temps après la mise en oeuvre du procédé selon la présente invention*

| éprouvette | 0 j | 28 j | 60 j | 90 j |
|---|---|---|---|---|
| 1 | 0,00 | 1,21 | 1,44 | 1,50 |
| 2 | 0,00 1,15 1,27 1,39 | 1,15 | 1,27 | 1,39 |
| 3 | 0,00 | 1,11 | 1,17 | 1,25 |
| moyenne | 0,00 | 1,16 | 1,29 | 1,38 |
| | | < 1,3 MPa | | < 2,0 MPa |

*Tableau 7 : Résistance à la compression en MPa selon l'éprouvette en immersion 60 jours après la mise en oeuvre du procédé selon la présente invention*

| éprouvette | 60 imm. j |
|---|---|
| 1 | 0,90 |
| 2 | 0,64 |
| 3 | 0,84 |
| moyenne | 0,89 |

La valeur de la compression à 60 jours après immersion doit satisfaire selon le guide technique des traitement des sols à la chaux et/ou aux liants hydrauliques - Application à la réalisation de remblais et de couches de forme (édité par le LCPC et le SETRA, édition janvier 200) à :

$$\underline{rc\ imm.} > 0{,}60$$

rc 60j
soit

$$\frac{0{,}89}{1{,}29} = 0{,}69$$

Ce qui est le cas du produit selon la présente invention.

Tous les essais laboratoire sont donc conformes au cahier des charges fixé permettant d'obtenir un produit autocompactant.

En résumé les caractéristiques du remblai selon la présente invention réalisé dans les conditions indiquées ci-dessus de l'exemple 1, pour une teneur en eau de 46 %, sont, pour les matériaux considérés:

| | |
|---|---|
| **Densité :** | **1,8 T/m$^3$,** |
| **Affaissement de cône :** | **13,5** cm, |
| **IPI mesuré à 24 h :** | **13,** |
| **Résistance à la compression à 28 jours:** | **1,16 MPa < 1,30 MPa** |
| **Résistance à la compression à 90 jours :** | **1,49 MPa < 2,00 MPa** |
| **PH à 90 j: 11** | |

## Exemple 2 : Utilisation d'autres matériaux de déblais :

D'autres prélèvements ont été effectués pour corroborer les essais réalisés avec les matériaux de déblais selon l'exemple 1 et évaluer si la proportion d'argile (caractérisée par la valeur de bleu de méthylène(VBs)) influait sur la prise du produit selon la présente invention. Les résultats sont rassemblés dans le tableau 8.

Les proportions des différents composants sont ceux définis pour l'exemple 1. Seul le type de matériau de déblai de chantier varie

*Tableau 8 : mesure de l'IPI à 24heures et de l'affaissement au cône du produit selon la présente invention obtenu à partir de différents matériaux de déblais de chantier ayant des valeurs de bleu de méthylène et une classification GTR différente.*

| N° prélèvement | Classification GTR | VBs | IPI mesurée à 24h | Affaissement au cône (en cm) |
|---|---|---|---|---|
| 1 | A1th | 2,13 | 11 | 14 |
| 2 | C1A1th | 2,13 | 15 | 13,5 |

(suite)

| N° prélèvement | Classification GTR | VBs | IPI mesurée à 24h | Affaissement au cône (en cm) |
|---|---|---|---|---|
| 3 | C1A1th | 1,02 | 13 | 15 |
| 4 | C1A1th | 1,4 | 13,5 | 13,5 |
| 5 | C1A1th | 2,06 | 13 | 14 |

La prise du produit selon la présente invention n'est pas influencée par la teneur en argile des matériaux de déblais si la valeur de bleu de méthylène est inférieure à 8, avantageusement inférieure ou égale à 2,13.

La préparation des chantiers demande lors des sondages les vérifications suivantes :

- teneur en eau naturelle des déblais ,
- ajout d'eau permettant d'obtenir un affaissement au cône >12 cm,
- IPI mesuré à 24h,
- classification GTR (pour les courbes de référence pénétrométrique).

L'étape suivante a été la réalisation d'un essai grandeur nature, permettant d'apprécier l'effet de masse sur le produit et le procédé selon la présente invention.

## 2 ESSAI GRANDEUR NATURE

Un essai a été effectué sur une quantité plus importante pour confirmer les résultats obtenus en laboratoire. Cet essai cherchait à démontrer plus précisément :

- l'absence de retrait,
- la possibilité de pomper le matériau,
- de bons résultats de compactage,
- l'apport possible d'une étanchéité par le produit au réseau d'assainissement.

### Description de l'essai

Un mini chantier d'assainissement a été recréé, le but étant de pouvoir procéder à tous les tests demandés lors d'un assainissement réel, de vérifier les hypothèses établies en laboratoire, de valider le cahier des charges du produit selon la présente invention (caractéristiques intrinsèques) et d'évaluer l'effet de masse sur le mélange.

Pour fabriquer le volume de remblai selon la présente invention nécessaire à l'essai, nous avons utilisé une machine de type Putzmeister® M 750.

Le choix s'est porté sur cette machine car elle est dotée d'un malaxeur d'une capacité d'environ 200 kg et a la possibilité de pomper le matériau selon la présente invention (coulis) sur environ 15 m.

Le mélange est malaxé grâce à un axe horizontal muni de 3 pales. Le pompage est effectué par la mise sous pression d'air du malaxeur (de 3 à 5 bars).

### Procédures de l'essai

De manière à optimiser le malaxage de la machine les mélanges préparés n'ont pas excédé 150 kg. Les matériaux de déblais, l'eau, le ciment, et les fibres sont pesés à chaque mélange à l'aide d'une balance électronique

Le matériau de déblai est constitué par des terres de déblai ayant les caractéristiques suivantes :

- teneur en eau naturelle de 20 %,
- valeur au bleu de méthylène de 1,4,
- classification GTR du déblai : A1C1th,
- granulométrie 0/50mm.

Les proportions du mélange selon le procédé selon la présente invention sont les suivantes :

Poids matériaux de déblai humides :     111,60 kg

**EP 1 298 254 B1**

| | |
|---|---|
| Ciment : | 7,00 kg |
| Eau naturelle : | 18,60 kg |
| Rajout d'eau : | 25,00 kg |
| Poids sec des matériaux de déblais : | 93,00 kg |
| Eau : | 43,60 kg |
| Teneur en eau globale : | 46,88% |

Le principe de mélange du procédé selon la présente invention a été le suivant :

- l'ensemble des matériaux (hors eau d'ajout) est malaxé à sec pendant 1 min,
- l'eau est ajoutée et le mélange est malaxé environ 2 min et
- le mélange est pompé sous forme de coulis vers la tranchée, grâce à la mise en pression de la machine.

Des échantillons sont prélevés pour réaliser des essais en laboratoires.

**Constatations lors de l'essai**

*Pompage*

Le mélange selon la présente invention est très facilement pompable, un écrêtage des plus gros éléments est toutefois indispensable.
Cette contrainte implique soit un criblage du matériau ou un léger concassage et émottage.

*Portance*

Les résultats obtenus en laboratoire (IPI de 13 mesuré à 24 h) laissaient présager une portance immédiate suffisamment rapide du mélange permettant la mise en oeuvre de la couche de forme, voire de la fondation dans les heures qui suivent et une remise en trafic des tranchées sous quelques heures.
L'essai in situ confirme ces points : il est possible de marcher sur le produit environ 2h 30 après sa mise en oeuvre.
De plus l'essai étant effectué avec des teneurs en eau proche du maximum de la plage d'utilisation (47%, IPI = 11 mesurée à 24 heures), des essais réalisés dans la plage basse (46%, JPI = 13 mesurée à 24 heures) donneraient des résultats encore meilleurs.

**Mise en place du produit selon la présente invention et pouvoir autocompactant**

Le produit selon la présente invention a été déversé par gâchée de 140 kg dans la tranchée.

**Retrait du produit selon la présente invention lors de l'autocompactage**

En laboratoire il n'avait été constaté aucun retrait sur les éprouvettes. Un des objectifs de l'essai in-situ était de voir sur une quantité importante cette absence de retrait et de ressuage.
Et effectivement il n'a été constaté aucune fissuration ou retrait sur la tranchée ni immédiat ni au fur et à mesure de la prise du produit selon la présente invention.
De plus le matériau obtenu ne présente aucun ressuage

**Essai d'étanchéité**

Des tests ont été réalisés de manière à voir comment le remblai selon la présente invention se comportait en ce qui concerne son étanchéité vis à vis des défauts engendrés lors de la pose de canalisations.
Pour cela après remblayage de la tranchée avec le produit selon la présente invention, des percements ont été effectués dans la canalisation, le but étant de tester l'étanchéité du remblai selon la présente invention et l'interface PVC / remblai selon la présente invention ("collage" de l'interface).
Le test a été effectué suivant le protocole Québec qui définit le test d'étanchéité à l'air et donc la détermination des fuites éventuelles du réseau, beaucoup plus contraignant pour des petites longueurs que les essais à plus forte pression.
Pour cela la canalisation a été percée à l'aide d'un foret de diamètre 4 mm et la canalisation a été testée sous une pression d'air de 5 Pa pendant 6 min. Les résultats de ce test sont rassemblés dans le tableau 9 suivant.

*Tableau 9 : Différence de pression d'air entre le début et la fin de l'essai dans une canalisation en fonction du nombre de trous percés dans la canalisation.*

| NB DE TROUS | DIAMETRE DE PERÇAGE | Pa départ | Pa fin | Pa MINI FIN D'ESSAI | DELAI MISE SOUS PRESSION |
|---|---|---|---|---|---|
| 1 | 4 | 5 | 5 | 4 | 6MIN |
| 2 | 4 | 5 | 5 | 4 | 6MIN |
| 3 | 4 | 5 | 2,3 | 4 | 6MIN |

Pour mémoire le percement d'un seul trou diamètre 4 mm dans une canalisation enrobée en sable ne permettrait même pas d'atteindre 5 Pa pour réaliser l'essai. Le remblai selon la présente invention permet donc de suppléer aux petits défauts d'étanchéité des réseaux.

**3 MACHINE SERVANT A LA FABRICATION D'UN REMBLAI AUTOCOMPACTANT SELON LA PRESENTE INVENTION**

Une machine selon la présente invention permettant de fabriquer un remblai autocompactant selon la présente invention est par exemple une centrale de mélange mobile S 15/6 - 1200 dont la description technique est la suivante :

**Dimensions de la machine**

| | |
|---|---|
| Longueur (hors tous) | 6,85 m |
| Largeur | 2,50m |
| Hauteur limitée | 2,70 m (pour le transport par camion AMPLIROLL): |
| Alimentation électrique | 125 A / 400V |

**Malaxeur**

| | |
|---|---|
| Volume du malaxeur / volume fini | 1800/1200 litres |
| Puissance malaxeur | 30 KW |
| Réducteur | Brevini planétaire |
| Trappe de vidange | 0,55 KW moteur Nordgear |
| Bâche à eau cloisonnée | 1000 litres minimum; livrée avec 50 |
| m de tuyau monté sur enrouleur | |
| Pompe à eau | 1 pièce |
| Paroi extérieure | plaques Hardox 10 mm |
| Fond | plaque Hardox 12 mm |
| Palette de malaxeur | PVC (Liebherr) |

Le capot du malaxeur est équipé d'une ouverture. Un volet monté sur le dessus du malaxeur permettra l'introduction des fibres en toute sécurité.

Il est monté avec un détecteur pour la suite du cycle auto : l'introduction des fibres conditionne la suite du cycle. Pour les autres cas: attente et à la suite d'une temporisation mise en service d'une alarme lumineuse.

Les bras du malaxeur sont interchangeables et en acier haute résistance. Les palettes sont en PVC de fabrication Liebherr. Une palette de raclage supplémentaire est prévue à la périphérie.

**Groupe hydraulique**

| Composant hydraulique | Danfoss Sauer |
| --- | --- |
| Monté avec radiateur de refroidissement d'huile. | |
| Groupe hydraulique avec pompe à débit variable: | 160 1/min à 220 bars maxi |
| et pour le crible : | 135 1/min à 250 bars maxi |

Le groupe hydraulique est dimensionné pour piloter simultanément le Twister et la pompe Bobcat. La conception sera supervisée par la société Danfoss Sauer.

**Lavage haute pression :**

| **Pompe haute pression** | 5,5 KW 170 Bars |
| --- | --- |
| | Buses sur bras et capot malaxeur Le malaxeur est équipé d'un lavage haute pression permettant de réaliser le dosage fin de l'eau. A la fin du travail, seul un rinçage sera nécessaire |

La machine est livrée avec une lance de lavage haute pression

**Pompe adjuvant :**

Pompe adjuvant Dosage en mode volumétrique par pompe à engrenages. Equipée d'une crépine et d'un clapet anti-retour.

**Case à granulat**

Elle est équipée de :

| 1 Crible / séparateur TWISTER B6 | |
| --- | --- |
| Longueur | 1740 mm |
| Largeur | 1557 mm |
| Hauteur | 1428 mm |
| Surface de passage | 1,4 m$^2$ |
| Volume de la trémie de base | 1,5 m$^3$ |
| Poids | 2150 kg |
| Puissance hydraulique | 30 KW |

**(avec régulateur de débit maxi 135 l/min et pression maxi de 250 bars)**

Couverture par bâche en matière synthétique et fixée par sangle

Le Twister est équipé d'une trappe latérale permettant d'évacuer les matériaux trop volumineux et ne passant pas par le crible. Un contact électrique arrête la machine si la trappe est ouverte en cours de cycle.
Une trappe latérale sera prévue au niveau de l'émotteur pour assurer la maintenance.
La trémie est livrée avec rehausses augmentant le volume à 3 m$^3$ environ. Les 4 parois seront rabattables et verrouillables pour le transport.
Pour permettre l'accès et la maintenance, le Twister est entouré d'une passerelle accessible par une échelle fixe. Lors de l'accès à la passerelle, un tapis comportant un dispositif de sécurité arrête automatiquement le fonctionnement du crible

Un système de sécurité à clés permettra le redémarrage de la machine par une action volontaire.

Sous le crible est monté une fin de course signalant un défaut de matériau. Une trappe de visite équipée d'une fin de course arrêtera le crible en cas d'ouverture. La paroi interne sous le crible sera livrée avec un revêtement anti-colmatant assurant un meilleur glissement du matériau.

**Tapis extracteur**

| | |
|---|---|
| Tapis situé sous le crible | |
| Longueur | 4,5 m |
| Largeur | 1000 mm |
| Puissance tambour moteur | 4KW |
| Rouleau de tête caoutchouté | |
| Racleur de nettoyage | |

**Silo ciment :**

| | |
|---|---|
| Contenance | 1,5 /2 m$^3$ |
| Vis ciment à moto-réducteur | 3 KW |

Le silo est équipé d'un vibreur pour le dosage et d'une fin de course de niveau bas le tout géré par l'automate. Il sera équipé d'une trappe de visite pour vidange et nettoyage. Le silo est prévu pour un remplissage par sacs «big-hag» ou conteneur métallique INTERCON. L'ouverture de vidange est de 1 m x 1 m. Chaque conteneur est équipé d'un joint élastomère s'écrasant lors du remplissage afin d'assurer une étanchéité poussières et humidité.

**Automatisme**

Le malaxeur est monté sur 3 pesons permettant une précision de pesée de 1 kg par constituant. Le cycle entièrement automatisé. Il gère la fabrication du remblai autocompactant selon la présente invention, le crible Twister et la pompe à béton

Bob-Cat.

Il s'agit d'un Automate SIEMENS type 315-2DP avec écran tactile Touchpanel TP 170B5,7

Module Siwarex pour la partie pesage

Automate pouvant gérer:

- 1 granulat, 1 adjuvant. 1 ciment, 1 eau
- mémoire pour 25 formules
- dosage gros - fin
- imprimante thermique
- modem pour la télémaintenance
- logiciel d'utilisation entièrement en français
- Conjugaison des produits suivant variation de la consigne de réglage du volume de la gâchée.

Un indicateur de plasticité est prévu (Wattmètre) Il indique la consistance du mélange L'automate et les éléments électriques sont montés dans une armoire étanche IP55. Les boutons de la marche manuelle sont montés en façade L'ensemble est protégé par une porte supplémentaire se verrouillant par un cadenas.

Tous les constituants sont des composants standard du commerce et disponibles auprès des distributeurs. Tous les moteurs proviennent de constructeurs connus dans le métier (étanchéité IP 55).

**Pompe béton**

|  |  |
|---|---|
| Pompe de type IR Bob- cat |  |
| Type | pompe à piston et basculeur |
| Débit | 15 à 23 m$^3$/h |
| Pression de pompage | 52 bars |
| Diamètre du cylindre de pompage | 127 mm |
| Course de la pompe | 610 mm |
| Puissance | 20 - 30 KW |
| Pilotage | hydraulique |
| Volume bac tampon | 200 litres minimum (Volume à augmenter en fonction de la disposition des éléments de la machine) |

Le pilotage de la pompe est asservi à l'automate de production.

La pompe est montée sous le malaxeur. Elle est alimentée par le groupe hydraulique Danfoss/Sauer. Une petite trémie tampon est placée entre la pompe et le malaxeur afin de pouvoir relancer un cycle de mélange plus rapidement (travail en temps masqué).

La pompe est livrée avec une grille type barreau monté sur le bac tampon et 40 m de tuyau souple (hors partie montée en rigide fixée le long de la machine).

**Montage des équipements**

L'ensemble de ces matériels sera monté sur une berce Ampliroll.

Cette berce devra être compatible aux bras de manutention équipant les camions utilisés en France et répondant à la norme NF 17-108.

La mise en position horizontale de la machine est effectuée par 4 vérins hydrauliques à commande individuelle.

**Revendications**

**1.** Procédé de réalisation de remblais autocompactants, non essorable, impliquant les opérations successives suivantes menées sur site :

-a) extraction et récupération des matériaux de déblais issus d'une tranchée,
-b) vérification de la teneur en argile de ces matériaux de déblais par mesure de la valeur de bleu de méthylène, cette valeur devant être inférieure à 8,
-c) détermination de la teneur en eau de ces matériaux de déblais,
-d) traitement préalable des matériaux de déblais par concassage ou écrêtage, afin d'obtenir des granulats de diamètre inférieur à 50 mm,
-e) ajout aux matériaux de déblais obtenus à l'étape d) de :

- 4 à 10% en poids de ciment par rapport au poids total des matériaux secs,
- 0,05 à 0,15% en poids d'un agent de prise en masse du mélange par rapport au poids total des matériaux secs, et
- la quantité d'eau nécessaire pour obtenir après malaxage un matériau de remblai présentant une teneur en eau comprise entre 40% et 55% en poids par rapport au poids total des matériaux secs,

-f) malaxage,
-g) pompage du mélange obtenu dans ladite tranchée pour former un remblai qui subit un autocompactage après une courte période.

**2.** Procédé selon la revendication 1, **caractérisé en ce que** le ciment est un ciment CPA-CEM 1 52,5 R.

**3.** Procédé selon l'une quelconque des revendications précédentes, **caractérisé en ce que** 0,05 à 1% en poids d'un adjuvant par rapport au poids total du ciment est ajouté à l'étape e).

**4.** Procédé selon la revendication 3, **caractérisé en ce que** l'adjuvant est choisit dans le groupe constitué par les réducteurs d'eau et les entraîneurs d'air.

**5.** Procédé selon l'une quelconque des revendications précédentes **caractérisé en ce que** 1 à 4% en poids de pigment par rapport au poids total du ciment est ajouté à l'étape e).

**6.** Procédé selon l'une quelconque des revendications précédentes **caractérisé en ce** la quantité d'eau ajoutée à l'étape e) est celle nécessaire pour obtenir après malaxage un matériau de remblai présentant une teneur en eau comprise entre 44,5% et 47,5% en poids par rapport au poids total des matériaux secs.

**7.** Procédé selon l'une quelconque des revendications précédentes **caractérisé en ce que** l'agent de prise en masse du mélange est constitué par des fibres acryliques.

**8.** Procédé selon l'une quelconque des revendications précédentes, **caractérisé en ce que** pour prévenir les possibles risques de poussée d'Archimède exercée par le produit obtenu à l'étape g) sur les tuyaux présents dans la tranchée, il comprend une étape supplémentaire f1) de mise en place et réglage altimétrique de butée aptes à contrôler le déplacement desdits tuyaux, ladite étape étant réalisé avant l'étape g).

**9.** Procédé selon la revendication 8, **caractérisé en ce que** les butées viennent coiffer les tuyaux interdisant leurs déplacements latéraux et limitant leurs déplacements verticaux ascendants.

**10.** Remblai autocompacté **caractérisé en ce qu'**il est susceptible d'être obtenu par le procédé selon l'une quelconque des revendications 1 à 9.

**11.** Remblai autocompacté selon la revendication 10, **caractérisé en ce que** son indice portant mesuré à 24 heures est supérieur à 10.

**12.** Remblai autocompacté selon l'une quelconque des revendications 10 ou 11,
**caractérisé en ce que** sa résistance à la compression à 28 jours est comprise entre 0,1 MPa et 1,3 MPa et sa résistance à la compression à 90 jours est comprise entre 0,1 et 2 MPa.

**13.** Remblai autocompacté selon l'une quelconque des revendications 10 à 12,
**caractérisé en ce que** son affaissement au cône est supérieur à 12 cm.

**14.** Utilisation du remblai autocompacté selon l'une quelconque des revendications 10 à 13 en tant que remblai des tranchés d'assainissement, remblai contigu aux bâtiments, remblai de carrières souterraines ou dans le traitement de sols de petites surfaces.


**Claims**

**1.** Method to form self-compacting, non-drying backfill, involving the following successive operations conducted on site:

a) extracting and recovering excavation material from a trench,
b) verifying the clay content of these excavation materials by measuring the methylene blue value, this value to be less than 8,
c) determining the water content of these excavation materials,
d) prior treatment of the excavation materials by crushing or knocking to obtain granulate with a diameter of less than 50 mm,
e) adding to the excavation materials obtained after step d) :

- 4 to 10% by weight of cement relative to the total weight of the dry materials,
- 0.05 to 0.15% by weight of a mixture setting agent relative to the total weight of the dry materials, and
- the necessary quantity of water to obtain a backfill material, after mixing, having a water content of between 40% and 55% by weight relative to the total weight of the dry materials,

f) mixing,

g) pumping the mixture obtained into said trench to form a backfill which undergoes self-compacting after a short period.

**2.** Method according to claim 1, **characterized in that** the cement is a CPA-CEM 1 52.5 R cement.

**3.** Method according to any of the preceding claims, **characterized in that** 0.05 to 1% by weight of an admixture relative to the total weight of the cement is added at step e).

**4.** Method according to claim 3, **characterized in that** the admixture is chosen from the group consisting of water-reducing and air-entraining admixtures.

**5.** Method according to any of the preceding claims, **characterized in that** 1 to 4% by weight of pigment relative to the total weight of the cement is added at step e).

**6.** Method according to any of the preceding claims, **characterized in that** the quantity of water added at step e) is the amount required to obtain a backfill material, after mixing, having a water content of between 44.5% and 47.5% by weight relative to the total weight of the dry materials.

**7.** Method according to any of the preceding claims, **characterized in that** the setting agent for the mixture consists of acrylic fibres.

**8.** Method according to any of the preceding claims, **characterized in that** to prevent possible risks of Archimedes thrust exerted by the product obtained at step g) on pipes laid in the trench, it comprises an additional step f) for the installing and altimetric adjustment of abutments capable of controlling movement of said pipes, said step being conducted before step g).

**9.** Method according to claim 8, **characterized in that** the abutments cap the pipes preventing their side movement and limiting their upward vertical movement.

**10.** Self-compacting backfill, **characterized in that** it can be obtained using the method according to any of claims 1 to 9.

**11.** Self-compacting backfill according to claim 10, **characterized in that** its bearing ratio measured at 24 hours is greater than 10.

**12.** Self-compacting backfill according to either of claims 10 or 11, **characterized in that** its compressive strength at 28 days lies between 0.1 MPa and 1.3 MPa, and its compressive strength at 90 days lies between 0.1 and 2 MPa.

**13.** Self-compacting backfill according to any of claims 10 to 12, **characterized in that** its cone slump is more than 12 cm.

**14.** Use of the self-compacting backfill according to any of claims 10 to 13 as filler for drainage trenches, building backfill, filler for underground quarries or for small surface ground treatment.

**Patentansprüche**

**1.** Verfahren zur Herstellung von selbstverdichtenden, nicht trocknenden Füllmaterialen, das die folgenden aufeinanderfolgenden Schritte umfasst, die vor Ort durchgeführt werden:

-a) Förderung und Gewinnung der aus einem Graben stammenden Aushubmaterialien,
-b) Überprüfung des Tongehalts dieser Aushubmaterialien durch Messung des Methylenblauwerts, wobei dieser Wert geringer als 8 sein muss,
-c) Bestimmung des Wassergehalts dieser Aushubmaterialien,
-d) Vorabbehandlung der Aushubmaterialien durch Zerkleinern oder Zerstoßen, um Granulate mit Durchmesser unter 50 mm zu erhalten,
-e) Zugabe zu den im Schritt d) erhaltenen Aushubmaterialien von:

- 4 bis 10 Gew.-% Zement in Bezug auf das Gesamtgewicht der Trockenmaterialien,

- 0,05 bis 0,15 Gew.-% eines Verfestigungsmittels der Mischung in Bezug auf das Gesamtgewicht der Trockenmaterialien, und
- der Wassermenge, die notwendig ist, um nach einem Rühren ein Füllmaterial zu erhalten, das einen Wassergehalt zwischen 40 Gew.-% und 55 Gew.-% in Bezug auf das Gesamtgewicht der Trockenmaterialien aufweist,

-f) Rühren,
-g) Pumpen der erhaltenen Mischung in den Graben, um ein Füllmaterial zu bilden, das nach einer kurzen Zeitdauer eine Selbstverdichtung erfährt.

2. Verfahren gemäß Anspruch 1, **dadurch gekennzeichnet, dass** der Zement ein CPA-CEM 1 52,5 R Zement ist.

3. Verfahren gemäß einem der vorhergehenden Ansprüche, **dadurch gekennzeichnet, dass** 0,05 bis 1 Gew.-% eines Zusatzmittels in Bezug auf das Gesamtgewicht des Zements im Schritt e) hinzugefügt wird.

4. Verfahren gemäß Anspruch 3, **dadurch gekennzeichnet, dass** das Zusatzmittel aus der Gruppe gewählt wird, die von den Wasserreduzierern und den Luftporenbildnern gebildet wird.

5. Verfahren gemäß einem der vorhergehenden Ansprüche, **dadurch gekennzeichnet, dass** 1 bis 4 Gew.-% an Pigment in Bezug auf das Gesamtgewicht des Zements im Schritt e) hinzugefügt wird.

6. Verfahren gemäß einem der vorhergehenden Ansprüche, **dadurch gekennzeichnet, dass** die im Schritt e) hinzugefügte Menge Wasser diejenige ist, die notwendig ist, um nach einem Rühren ein Füllmaterial zu erhalten, das einen Wassergehalt aufweist, der zwischen 44,5 Gew.-% und 47,5 Gew.-% in Bezug auf das Gesamtgewicht der Trockenmaterialien ist.

7. Verfahren gemäß einem der vorhergehenden Ansprüche, **dadurch gekennzeichnet, dass** das Verfestigungsmittel der Mischung aus Acrylfasern gebildet ist.

8. Verfahren gemäß einem der vorhergehenden Ansprüche, **dadurch gekennzeichnet, dass**, um die möglichen Risiken des hydrostatischen Auftriebs zu verhindern, der von dem im Schritt g) erhaltenen Produkt auf die in der Grube vorhandenen Rohre ausgeübt wird, es einen zusätzlichen Schritt f1) der Platzierung und höhenverstellbaren Einstellung des Anschlags umfasst, der geeignet ist, um die Bewegung der Rohre zu kontrollieren, wobei der Schritt vor dem Schritt g) durchgeführt wird.

9. Verfahren gemäß Anspruch 8, **dadurch gekennzeichnet, dass** die Anschläge die Rohre überdecken, wobei sie deren seitliche Bewegungen verbieten und deren vertikale aufsteigende Bewegungen beschränken.

10. Selbstverdichtendes Füllmaterial, **dadurch gekennzeichnet, dass** es durch das Verfahren gemäß einem der Ansprüche 1 bis 9 erhalten werden kann.

11. Selbstverdichtendes Füllmaterial gemäß Anspruch 10, **dadurch gekennzeichnet, dass** sein nach 24 Stunden gemessener Tragindex größer als 10 ist.

12. Selbstverdichtendes Füllmaterial gemäß einem der Ansprüche 10 oder 11, **dadurch gekennzeichnet, dass** seine Druckfestigkeit über 28 Tage zwischen 0,1 MPa und 1,3 MPa und seine Druckfestigkeit über 90 Tage zwischen 0,1 und 2 MPa ist.

13. Selbstverdichtendes Füllmaterial gemäß einem der Ansprüche 10 bis 12, **dadurch gekennzeichnet, dass** sein Ergebnis im Slump-Test größer als 12 cm ist.

14. Verwendung des selbstverdichtenden Füllmaterials gemäß einem der Ansprüche 10 bis 13 als Füllmaterial der Abwasserreinigungsgräben, an Gebäuden anliegendes Füllmaterial, Füllmaterial für unterirdische Steinbrüche oder bei der Behandlung von Böden mit kleinen Oberflächen.

**Figure 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2758378
- US 5716448 A